# FASCICULE DE BREVET EUROPEEN

(11) **EP 0 561 679 B1**
(45) Date de publication et mention de la délivrance du brevet: **15.11.1995**
(21) Numéro de dépôt: 93400646.1
(22) Date de dépôt: 15.03.1993
(51) Int. Cl.: B65G 53/12

(54) **Dispositif semi-portatif et installation pour la distribution d'un matériau granuleux**
Halbtragbare Vorrichtung und Anlage für die Verteilung von körnigem Schüttgut
Semi-portable device and installation for distributing granular material

(30) Priorité: 16.03.1992 FR 9203543
(43) Date de publication de la demande: 22.09.1993
(73) Titulaire: NEU TRANSF'AIR, F-59704 Marcq-en-Baroeul Cédex (FR)
(72) Inventeur: Fourcroy, Jean-Pierre, F-59115 Leers (FR); Decauwer, Patrick, F-59560 Comines (FR); Kiesler, Pascal, F-59970 Fresnes S/Escaut (FR); Delannoy, Christian, F-59260 Hellemmes (FR)
(74) Mandataire: Hénnion, Jean-Claude

(56) Documents cités:
- CH-A- 121 463
- DE-A- 2 443 552

## Description

La présente invention concerne la distribution par un opérateur d'un matériau granuleux, notamment du sable, à partir d'un poste fixe. Elle concerne en particulier le remplissage des réservoirs, dénommés couramment sablières, qui sont prévues dans des trains ou tramways. La présente invention a trait plus précisément à un dispositif semi-portatif permettant à un opérateur d'assurer la distribution du matériau granuleux à partir d'un poste fixe dans une zone déterminée entourant ledit poste fixe. Elle a trait également à une installation complète pour la distribution du matériau granuleux dans de multiples zones déterminées.

Dans les trains ou tramways, il est connu de projeter du sable entre la roue et le rail afin d'augmenter le pouvoir d'adhérence de la roue sur le rail. Cette projection est réalisée, au démarrage du train et à chaque fois qu'un couple important est à transmettre, à partir d'un réservoir de stockage , dénommé sablière. Le remplissage de cette sablière est réalisé lorsque le train ou le tramways est stationné, en particulier s'agissant du train lorsque celui-ci est à quai. Le réservoir constituant la sablière débouche sur une ouverture accessible de l'extérieur du train ou du tramways.

La méthode la plus simple pour remplir la sablière était totalement manuelle, l'opérateur chargeant le sable par l'orifice à partir de seaux transportés sur le quai. On a amélioré cette méthode en plaçant à proximité d'une zone de remplissage donnée une cuve de stockage reliée à une canalisation. La cuve de stockage était positionnée à une hauteur telle que le sable s'écoulait par gravitation dans la canalisation jusque dans l'orifice de la sablière.

On a amélioré cette dernière méthode en créant dans la cuve de stockage une surpression de manière à augmenter l'écoulement du sable par gravité.

L'inconvénient majeur de cette méthode réside dans la nécessité de disposer d'une cuve de stockage, située suffisamment en hauteur par rapport à l'orifice de la sablière, de manière à obtenir le transfert du sable par gravité à l'intérieur de la canalisation, malgré les pertes de charge. Ceci oblige à placer régulièrement le long du quai une succession de cuves permettant le remplissage de toutes les sablières correspondant aux différentes voitures d'un même train à quai.

On a déjà proposé dans le document DE.A.2 443 552 un dispositif pour la distribution d'un matériau granuleux qui comporte une colonne de remplissage du matériau, alimentée en air comprimé sous pression, et au moins une tête portable de distribution, ladite tête consistant en un tube creux rigide et obturable, qui est reliée par une canalisation flexible à la colonne de remplissage. De plus les conditions de pression et de débit de l'air comprimé dans la cuve de transfert et les dimensions de la canalisation flexible et de la tête de distribution sont déterminées en sorte que l'écoulement du matériau dans la canalisation flexible correspond à un transport en phase dense.

Dans le document DE.A.2 443 552, le tube de distribution comporte un robinet à boisseau sphérique et un levier à main, situé vers l'arrière du tube, vers la zone de raccordement dudit tube avec la canalisation flexible.

Selon le demandeur le dispositif précité comporte deux inconvénients ; le premier consiste dans le risque de déversement du matériau granuleux, sur le quai notamment, lorsque l'opérateur retire le tube de l'ouverture d'entrée de la sablière ; le second consiste dans la nécessité de prévoir dans la colonne de remplissage un système d'équilibrage de pression, du fait du fonctionnement en phase dense.

L'objet de la présente invention est de proposer un dispositif pour la distribution d'un matériau granuleux qui pallie les inconvénients précités.

Il s'agit d'un dispositif qui comporte de manière connue au moins une cuve de transfert du matériau, alimentée en air comprimé sous pression, et au moins une tête portable de distribution, ladite tête consiste en un tube creux rigide dont une première extrémité est reliée par une canalisation flexible à la cuve de transfert.

De manière caractéristique, les conditions de pression et de débit de l'air comprimé dans la cuve de transfert sont déterminées en sorte que l'écoulement du matériau dans la canalisation flexible correspond à un fonctionnement en phase solide, et la seconde extrémité du tube creux rigide est munie d'un obturateur amovible consistant en une plaque , qui comporte une partie sensiblement circulaire, faisant face à la seconde extrémité du tube lorsque l'obturateur est en position fermée ; de plus ladite plaque est montée pivotante par rapport à une tige qui s'étend longitudinalement le long de l'extérieur du tube et qui est fixée à la plaque dans une partie excentrée par rapport à la partie circulaire de celle-ci et la tige est actionnable angulairement par une poignée solidaire de la tige vers l'extrémité de celle-ci opposée à l'obturateur.

Dans le transport pneumatique, d'un produit solide en vrac, par un courant de gaz à l'intérieur d'une tuyauterie étanche, on distingue quatre modes de fonctionnement différents. Le fonctionnement en phase diluée correspond à une vitesse de gaz élevée et une concentration en produit solide faible ; la répartition des particules solides dans la section droite de la conduite est relativement homogène. Le fonctionnement en phase dense correspond à une vitesse du gaz voisine de la vitesse minimale de transport en écoulement stable, elle se situe entre 10 et 25 mètres par seconde selon les caractéristiques du produit; la concentration en produit solide est plus importante qu'en phase diluée en sorte que la répartition des particules selon la section droite de conduite est hétérogéne , la plupart des particules se trouvant dans la partie basse de la conduite lorsque l'axe de celle-ci est situé dans un plan horizontal ; cependant l'écoulement reste stable. Le fonctionnement en phase dense discontinu correspond à une vitesse de gaz inférieure à celle de la phase dense ; les particules solides ne sont plus en suspension dans le gaz mais viennent s'accumuler sur la génératrice inférieure de la conduite et progressent de manière discontinue. Le fonctionnement en phase solide correspond à des vitesses moyennes du gaz et des particules égales ou inférieures à 5 métres par seconde avec une concentration en particules très importante. Dans ce cas le matériau en vrac se déplace à l'intérieur de la conduite à l'image d'un boudin sortant d'une extrudeuse.

Ainsi, grâce au choix particulier des conditions de pression et de débit d'air permettant ce fonctionnement en phase solide, le déplacement du matériau à l'intérieur de la canalisation flexible se fait sans à-coup jusqu'à la tête de distribution qui peut donc, sans risque pour l'opérateur, être déplacée le long du quai et positionnée dans l'orifice d'entrée de la sablière. Ce déplacement peut être obtenu dans de bonnes conditions, alors même que la cuve de transfert se trouve placée au niveau voire même en dessous du niveau de l'orifice de chargement. Ainsi il est éventuellement possible de rendre totalement invisible les cuves de transfert permettant d'alimenter toutes les têtes de distribution, placées à poste fixe le long du quai.

L'opérateur peut introduire le tube de la tête de distribution dans l'orifice d'entrée de la sablière puis à l'aide de la poignée qui se trouve à sa portée faire pivoter la tige et donc la plaque obturant la seconde extrémité du tube.

L'obturation de la tête de distribution est obtenue à l'extrémité du tube; lors du retrait dudit tube, il n'y a donc aucun risque de déversement sur le quai du matériau restant à l'intérieur du tube.

Avantageusement, s'agissant du remplissage d'un réservoir surmonté d'une conduite d'entrée, les dimensions de celle-ci sont telles que la seconde extrémité du tube est bloquée en position dans le réservoir lorsque l'obturateur est en position ouverte; l'encombrement de la plaque et du tube empêche le retrait de la tête.

De la sorte il ne peut y avoir de déversement accidentel de matière en dehors du réservoir, puisque l'utilisateur est obligé de fermer l'obturateur pour procéder au retrait de la tête de remplissage.

Avantageusement le dispositif comporte un support rotatif qui est fixé sur la face extérieure de la plaque pivotante. Ce support rotatif sert de protection de la plaque contre les éventuels chocs frontaux et surtout permet un déplacement facilité de la tête de distribution le long du quai. Il faut souligner que le tube creux et la canalisation sont remplis du matériau granuleux, ce qui confère à la tête de .distribution un poids important et rend malaisée sa manipulation. Ainsi l'opérateur peut poser l'extrémité avant du tube sur le quai et déplacer la tête de distribution à l'instar d'une brouette.

De préférence le support rotatif consiste en une roulette notamment sphérique, montée libre en rotation dans un logement qui est lui-même fixé sur la face extérieure de la plaque par un moyen de fixation également libre en rotation.

De préférence, s'agissant de la distribution de matière granuleuse dans une zone déterminée à partir d'un poste fixe, le dispositif semi-portatif de l'invention comporte de plus, audit poste fixe, un bras vertical supportant une partie de la canalisation flexible ; ledit bras est monté pivotant autour d'un axe horizontal situé à sa partie basse. Un contrepoids fixé sur ledit bras sous l'axe de pivotement ou un moto-réducteur fixé sur l'axe limite le pivotement lors du déplacement de la canalisation. L'intérêt de ce bras pivotant apparaîtra clairement à la lecture de la description qui sera faite ci-dessous.

Avantageusement l'axe de pivotement est entrainé en rotation par un moyen de pivotement actionnable par l'opérateur portant la tête de distribution, grâce à des moyens de commande montés sur le tube vers sa première extrémité.

S'agissant de la distribution de sable, notamment dans les sablières de train, à partir d'un point fixe sur un quai, la canalisation flexible a un diamètre intérieur qui est compris entre 30 et 50 millimètres, une longueur totale entre la cuve de transfert et la seconde extrémité du tube de la tête de distribution qui est au plus de 15 mètres, la pression d'air comprimé dans la cuve de transfert est de l'ordre de 0,1 à 0,2 MPa.

C'est un autre objet de la présente invention que de proposer une installation de distribution de matériaux granuleux à p postes fixes, qui comporte un silo de stockage raccordé à et alimentant m cuves de stockage chaque cuve de stockage étant raccordée à et alimentant n cuves de transfert, chaque cuve de transfert étant raccordée à et alimentant une tête de distribution. Par exemple chaque cuve de stockage est raccordée et alimente quatre cuves de transfert, sans aucune vanne intermédiaire. Le pilotage est essentiellement assuré à partir des cuves de stockage et la disponibilité des têtes de distribution est immédiate par maintien de la pression.

La présente invention sera mieux comprise à la lecture de la description qui va être faite d'un exemple de réalisation d'une installation de distribution de sable pour le remplissage de sablière, illustré par le dessin annexé dans lequel
la figure 1 est une représentation schématique partielle d'une installation avec une cuve de stockage enterrée et,
la figure 2 est une vue schématique d'une tête de distribution, en cour de remplissage d'une sablière .

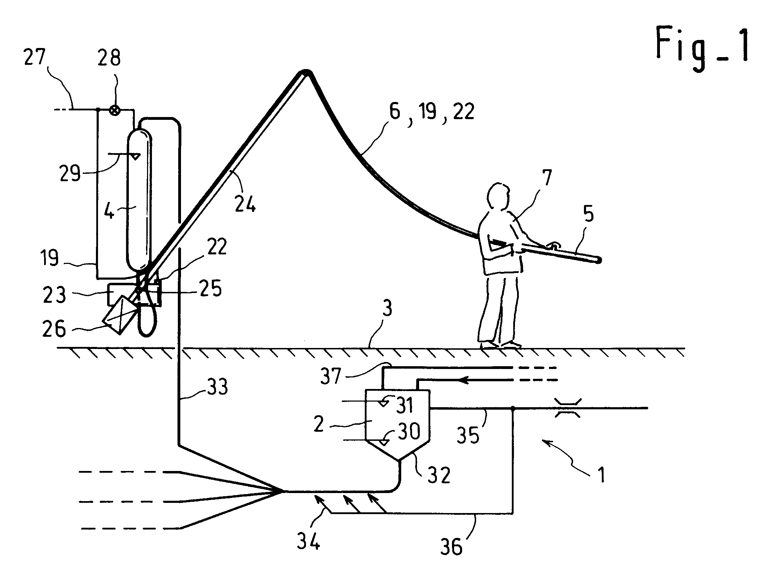

L'installation 1 de distribution de sable, montrée à la figure 1, est destinée au remplissage des sablières d'un train à quai.

Cette installation 1 comporte un silo de stockage non représenté qui alimente une pluralité de cuves de stockage 2 sous le niveau du quai 3. Chaque cuve de stockage 2 est raccordée et alimente quatre cuves de transfert 4. Chaque cuve de transfert 4 est raccordée par une canalisation flexible 6 à une tête de distribution 5 , portable par un opérateur 7. Comme on peut le voir à la figure 1, l'opérateur 7 peut se déplacer sur le quai 3 avec la tête de distribution 5 jusqu'à l'emplacement où se trouve l'orifice d'entrée 8 du réservoir 9 constituant la sablière.

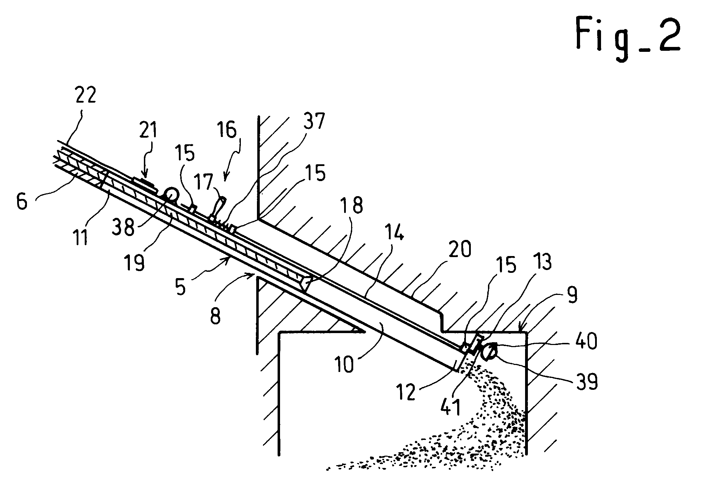

A la figure 2 on a représenté une tête de distribution 5, en fonctionnement, en cours du remplissage de la sablière 9.

La tête de distribution 5 est composée d'un tube creux 10 dont la première extrémité 11 est raccordée par la canalisation souple 6 à la cuve de transfert 4. La seconde extrémité 12 peut être fermée par un obturateur 13.

Cet obturateur 13 est une plaque qui est disposée transversalement par rapport à la direction du tube 10. Cette plaque est montée pivotante par rapport à une tige 14 qui s'étend longitudinalement le long du tube 10 et qui est rendue solidaire de celui-ci par des pattes de fixation 15, la tige 14 pouvant pivoter sur elle-même à l'intérieur desdites pattes 15. L'extrémité 16 de la tige 14, opposée à l'obturateur 13, est munie d'une poignée 17, apte à assurer le pivotement de la tige 14 et donc de l'obturateur 13. On comprend que la disposition de l'obturateur 13 par rapport à la seconde extrémité 12 du tube 10 est telle que l'actionnement par l'opérateur de la poignée 17 permet de placer la partie sensiblement circulaire de la plaque, formant l'obturateur 13, et excentrée par rapport à la tige 14 face à la seconde extrémité 12 du tube 10 de manière à réaliser la fermeture sensiblement étanche de la tête de distribution.

L'étanchéité est encore améliorée grâce à la présence d'un ressort 37 qui entoure la tige 14 et qui prend appui sur une patte de fixation 15 en sorte de repousser la poignée 17 vers la première extrémité 11 du tube 10. En position d'obturation, la plaque 13 est plaquée, grâce à l'action de ce ressort 37, sur la seconde extrémité 11 du tube 10. En position ouverte, la plaque 13 est maintenue en position par la patte de fixation 15 qui affleure ladite seconde extrémité 12.

Une tige transversale 38 permet une meilleure préhension de la tête de distribution par l'utilisateur.

De plus sur la face extérieure de la plaque 13 est fixée une roulette 39, sphérique, cette roulette 39 est montée, libre en rotation dans un logement 40, hémi-sphérique, qui est fixé sur la plaque 13 par l'intermédiaire d'une tige 41 elle-même libre en rotation sur elle-même.

La tête de distribution 5 comporte également une buse d'aspiration 18 qui est fixée rigidement sur la face extérieure du tube et qui est raccordé par une gaine 19 à une source d'aspiration. La gaine 19 est elle-même solidarisée au tube 10 et à la canalisation flexible 6. La buse d'aspiration 18 proprement dite consiste en un embout evasé, apte à collecter les poussières émises, lors du remplissage du réservoir 9, dans la conduite 20 reliant la partie supérieure dudit réservoir 9 à l'orifice d'entrée 8 de la sablière.

Comme on peut le voir sur la figure 2, la position de la buse d'aspiration 18, en retrait par rapport à la seconde extrémité 12 du tube 10, permet de collecter directement les poussières dans le conduit 20 et non dans l'intérieur du réservoir 9.

Vers la première extrémité 11 du tube 10, la tête de distribution 5 comporte également un interrupteur 21 relié par un cable électrique 22, solidaire de la canalisation flexible 6, au moyen d'entraînement 23 en rotation du bras pivotant 24.

Ce bras pivotant 24 est destiné à supporter la canalisation flexible 6 sur une partie de sa longueur, afin de faciliter la manutention de cette canalisation flexible par l'opérateur 7 lorsqu'il se déplace sur le quai avec la tête de distribution 5 pour atteindre les différents orifices d'entrée 8 des sablières, situés dans la zone correspondant au point fixe constitué par la cuve de transfert 4.

Le bras 24 est monté pivotant autour d'un axe horizontal 25. Cet axe 25 est entraîné en rotation par le moyen d'entraînement 23, qui est par exemple un vérin rotatif. Sous cet axe 25 le bras 24 est pourvu d'un contrepoids 26. Le rôle de ce contrepoids 26 est de maintenir naturellement le bras 24 en position verticale, malgré la charge supportée dans la canalisation flexible 6 solidaire de la partie haute dudit bras 24, cette canalisation flexible étant totalement remplie de sable.

Le moyen d'entraînement 23 et le contrepoids 26 sont placés à proximité et sous la cuve de transfert 4, de manière à faciliter le branchement de la canalisation souple à ladite cuve 4 ainsi que le raccordement de la gaine électrique 22 de commande dudit moyen d'entraînement 23.

Un moto-réducteur peut faire office de moyen d'entraînement et de contrepoids.

La cuve de transfert 4 comporte un système de dépoussiérage permettant d'évacuer et de filtrer les poussières contenues dans ladite cuve lors de son remplissage à partir de la cuve de stockage 2. Ce système de dépoussiérage consiste en une source d'aspiration non représentée reliée à la partie haute de la cuve de transfert 4 par une canalisation 27 sur laquelle est placée une vanne de commande 28. La gaine d'aspiration 19, solidaire du bras 24, quitte celui-ci à proximité de la partie basse de la cuve de transfert 4 et vient se raccorder sur la canalisation d'aspiration 27 en amont de la vanne de commande 28.

La cuve de transfert 4 est équipée d'un pressostat permettant de contrôler la pression régnant à l'intérieur de la cuve. Elle est aussi équipée d'un capteur de niveau 29 permettant de contrôler la hauteur du sable à l'intérieur de la cuve . Dans un exemple de réalisation la capacité de la cuve de transfert 4 était de 90 litres environ, lorsque le sable avait atteint le capteur de niveau 27. Comparativement le réservoir 9 de la sablière avait une contenance d'une soixantaine de litres, avec un remplissage utile de 45 litres de sable.

La cuve de stockage enterrée 2, placée sous le niveau du quai, est équipée de deux capteurs de niveau : l'un 30 situé en partie basse de la cuve 2 et permettant de détecter le niveau bas à partir duquel doit être effectué le remplissage de la cuve à partir du silo. L'autre capteur 31 est situé en partie haute de la cuve 2 et permet de détecter le niveau haut de sable dans la cuve à partir duquel doit s'arrêter le remplissage de la cuve. Dans l'exemple précité, la contenance utile de la cuve de stockage 2 était de 250 litres.

La partie inférieure 32 de la cuve de stockage 2 a une forme conique qui est terminée à son extrémité par une canalisation 33 qui relie ladite cuve de stockage 2 à la partie haute de la cuve de transfert 4.

La cuve de stockage 2 est également équipée d'un système de dépoussièrage, du même type que celui équipant la cuve de transfert 4.

Le déplacement du sable à l'intérieur de la canalisation 33 depuis la cuve de stockage 2 jusqu'à la cuve de transfert 4 est assuré de manière classique par des injecteurs d'air comprimé 34.

La cuve de stockage 2 est raccordée à un réseau d'air comprimé par une canalisation 35 dont une dérivation 36 alimente les injecteurs 34. Le réseau d'air comprimé est à une pression de 0,7 MPa (7 bars).

La cuve de stockage 2 est raccordée au silo de stockage de sable par la canalisation 37 débouchant dans la partie supérieure de ladite cuve 2.

Le fonctionnement de l'installation est le suivant. Lorsqu'un train est arrivé à quai, l'opérateur chargé du remplissage des sablières se saisit de la tête de distribution 5 qui se trouve être rangée verticalement le long du bras 24, appuyée sur la roulette 39, qui sert de protection contre les chocs. Grâce à l'interrupteur 21, il commande la mise en route du moyen d'entraînement 23 et donc la rotation de l'axe 25 de pivotement du bras 24, de manière à ce que ledit bras 24 pivote angulairement dans la direction où se trouve la sablière à remplir par rapport au point fixe.

Il peut déplacer la tête de distribution 5 en posant la roulette 39 sur le sol et en poussant ladite tête 5 à l'instar d'une brouette.

L'opérateur, après avoir dégagé l'orifice d'entée 8 de la sablière, introduit dans le conduit 20 et jusqu'à l'intérieur du réservoir 9 le tube 10. Puis il actionne la poignée 17 de manière à faire pivoter l'obturateur 13 et à dégager la seconde extrémité 12 du tube 10. Pendant cette opération, le système d'aspiration était déjà en fonctionnement de telle manière que la buse d'aspiration 18 puisse capter les poussières émises dans le conduit 20 dès l'ouverture du tube 10.

Les conditions de pression et de débit d'air à l'intérieur de la cuve de transfert 4 ont été déterminées de telle manière que le sable se déplace à l'intérieur de la canalisation flexible 6 à faible vitesse, sans à-coups, sous une forme comparable à celle d'un boudin sortant d'une extrudeuse. Ces conditions correspondent au fonctionnement en phase solide pour le transfert d'un matériau en vrac.

Dans l'exemple précité, la canalisation flexible avait un diamètre intérieur d'environ 38 millimètres, la longeur de celle-ci était de 6 mètres environ, le débit d'air 12 Nm³/h et la pression dans la cuve 0,13 MPa (1,3 bars). Comparativement le diamètre de la canalisation 33 raccordant la cuve de stockage 2 à la cuve de transfert 4 était de 50 millimètres avec un débit d'air de 35 Nm³/h, une pression dans la cuve de stockage 2 de 0,15 MPa (1,5 bars) tandis que la pression aux injecteurs 34 était de 0,2 MPa (2 bars). Le gradient de pression entre la cuve de stockage 2 et les cuves de transfert 4 s'établit correctement dans la mesure où une garde de sable dans la cuve de stockage 2 maintient la perte de charge qui est nécessaire.

Une fois que le niveau de sable dans le réservoir 9 atteint la seconde extrémité 12 du tube 10, le transfert de sable dans le tube 10 s'arrête de lui-même. C'est aussi un avantage important résultant des conditions de fonctionnement du dispositif de l'invention. Il ne peut y avoir débordement de sable hors de la sablière, la pression d'alimentation étant insuffisante pour cela.

Après remplissage, l'opérateur ferme l'obturateur 13 qui par l'intermédiaire d'un contact électrique de position fermée autorise l'apport complémentaire de sable dans la cuve de transfert 4. Un signal lumineux indique ensuite à l'opérateur la disponibilité du système.

Si l'utilisateur omet de fermer l'obturateur , il ne peut pas retirer la tête de distribution de l'ouverture 8 de la sablière 9 du fait du blocage de la plaque 13 dans la conduite 20.

Bien sûr les conditions ci-dessus pourront varier au cas par cas en fonction des paramètres structurels de l'installation. Il importe, selon l'invention, d'obtenir un écoulement du sable entre la cuve de transfert 4 et la tête de distribution 5 qui correspondent en fonctionnement en phase solide, comme cela était indiqué précédemment.

L'invention n'est pas limitée au mode de réalisation qui vient d'être décrit. En particulier dans l'exemple précité, l'implantation du point fixe correspond à l'emplacement de la cuve de transfert 4 sur le quai ; il pourrait en être différemment dans le cas où la cuve de transfert 4 serait elle aussi enterrée, comme c'est le cas ci-dessus de la cuve de stockage 2.

De plus l'ensemble du dispositif peut être monté sur un chariot mobile. Il suffit à l'opérateur d'amener le chariot en position sur le quai à proximité de moyens fixes de raccordement d'une cuve de stockage audit dispositif mobile. Il n'y a donc plus aucune structure apparente sur le quai.

## Revendications

1. Dispositif pour la distribution d'un matériau granuleux, comportant au moins une une cuve de transfert (4) du matériau, alimentée en air comprimé sous pression, et au moins une tête portable de distribution (5), ladite tête consistant en un tube creux rigide (10) dont une première extrémité (11) est reliée par une canalisation flexible (6) à la cuve de transfert (4), caractérisé en ce que les conditions de pression et de débit de l'air comprimé dans le cuve de transfert (4) sont déterminées en sorte que l'écoulement du matériau dans la canalisation flexible (6) correspond à un fonctionnement en phase solide, et en ce que la seconde extrémité (12) du tube creux rigide (10) est munie d'un obturateur amovible (13) consistant en une plaque, qui comporte une partie sensiblement circulaire, faisant face à la seconde extrémité (12) du tube (10) lorsque l'obturateur est en position fermée ; ladite plaque étant montée pivotante par rapport à une tige (14) qui s'étend longitudinalement le long de l'extérieur du tube (10) et qui est fixée à la plaque dans une partie excentrée par rapport à la partie circulaire de celle-ci et la tige (14) étant actionnable angulairement par une poignée (17) solidaire de la tige (14) vers l'extrémité (16) de celle-ci opposée à l'obturateur (13).

2. Dispositif selon la revendication 1 caractérisé en ce que s'agissant du remplissage d'un réservoir (9) surmonté d'une conduite d'entrée (20), les dimensions de celle-ci sont telles que la seconde extrémité (12) du tube (10) est bloquée en position dans le réservoir (9) lorsque l'obturateur (13) est en position ouverte.

3. Dispositif selon l'une des revendications 1 ou 2 caractérisé en ce qu'il comporte un support rotatif de protection et de déplacement qui est fixé sur la faxe extérieure de la plaque pivotante (15).

4. Dispositif selon la revendication 3 caractérisé en ce que le support rotatif consiste en une roulette (39), notamment sphérique, montée libre en rotation dans un logement (40) qui est lui-même fixé sur la face extérieure de la plaque (43) par un moyen de fication (47) également libre en rotation.

5. Dispositif selon l'une des revendications 1 à 4 caractérisé en ce qu'il comporte de plus un bras vertical (24) supportant une partie de la canalisation flexible (6) et monté pivotant autour d'un axe horizontal (25) situé à sa partie basse, ainsi que des moyens (26) de limitation de pivotement dudit bras (24).

6. Dispositif selon la revendication 5 caractérisé en ce que l'axe de pivotement (25) est entraîné en rotation par un moyen de pivotement (23) actionnable par l'opérateur (7) portant la tête de distribution (5), grâce à des moyens de commande (21) montés sur le tube (10) vers sa première extrémité (11).

7. Dispositif selon la revendication 1 pour la distribution de sable, notamment dans les sablières de train, à partir d'un point fixe sur un quai, caractérisé en ce que la canalisation flexible (6) a un diamètre intérieur qui est compris entre 30 et 50 millimètres, une longueur totale entre la cuve de transfert (4) et la seconde extrémité (12) du tube (11) de la tête de distribution (5) qui est au plus de 15 mètres, la pression d'air comprimé dans la cuve de transfert (4) est de l'ordre de 0,1 à 0,2 MPa.

8. Installation de distribution de matériaux granuleux à p postes fixes, qui comporte un silo de stockage raccordé à et alimentant m cuves de stockage enterrées, chaque cuve de stockage étant raccordée à et alimentant n dispositifs selon l'une des revendications 1 à 7 ci-dessus.

9. Installation selon la revendication 8 caractérisée en ce qu'elle ne comporte, pour chaque cuve de stockage (2) et les n dispositifs qui lui sont raccordés, qu'une seule alimentation en air comprimé (37) dont les conditions de pression et de débit sont déterminées pour obtenir l'écoulement du sable dans la canalisation flexible (6) selon un fonctionnement en phase solide.

10. Installation selon la revendication 9 caractérisée en ce qu'au moins un dispositif est monté sur un chariot mobile, et en ce qu'elle comporte des moyens de raccordement fixes de la cuve de stockage audit dispositif mobile.

## Claims

1. Device for distributing a granular material, including at least one material transfer tank (4), fed with pressurized compressed air, and at least one portable distribution head (5), the said head consisting of a rigid hollow tube (10), a first end (11) of which is connected by a flexible pipe (6) to the transfer tank (4), characterized in that the pressure and flow rate conditions of the compressed air in the transfer tank (4) are defined in such a way that the flow of material through the flexible pipe (6) corresponds to solid-phase operation, and in that the second end (12) of the rigid hollow tube (10) is provided with a movable closure member (13) consisting of a plate, which includes a substantially circular part, facing the second end (12) of the tube (10) when the closure member is in the closed position; the said plate being mounted so as to pivot with respect to a rod (14) which extends longitudinally along the outside of the tube (10) and which is fixed to the plate in a part that is off-centre with respect to the circular part of this plate and the rod (14) being actuable angularly by a handle (17) secured to the rod (14) towards the end (16) of the latter which is opposite the closure member (13).

2. Device according to Claim 1, characterized in that, in the case of filling a reservoir (9) surmounted by an inlet conduit (20), the dimensions of the latter are such that the second end (12) of the tube (10) is blocked in position in the reservoir (9) when the closure member (13) is in the open position.

3. Device according to one of Claims 1 or 2, characterized in that it includes a rotary protection and displacement support which is fixed to the outer face of the pivoting plate (15).

4. Device according to Claim 3, characterized in that the rotary support consists of a roller (39), in particular a spherical roller, mounted so as to rotate freely in a housing (40) which is itself fixed to the outer face of the plate (43) by a fastening means (47) which is also free to rotate.

5. Device according to one of Claims 1 to 4, characterized in that it furthermore includes a vertical arm (24) supporting a part of the flexible pipe (6) and mounted so as to pivot about a horizontal pin (25) located at its bottom part, as well as means (26) for limiting the pivoting of the said arm (24).

6. Device according to Claim 5, characterized in that the pivot pin (25) is driven in rotation by a pivoting means (23) actuable by the operator (7) carrying the distribution head (5), by virtue of control means (21) mounted on the tube (10) towards its first end (11).

7. Device according to Claim 1 for distributing sand, in particular in train sand boxes, from a fixed point on a platform, characterized in that the flexible pipe (6) has an internal diameter which is between 30 and 50 millimetres, a total length between the transfer tank (4) and the second end (12) of the tube (11) of the distribution head (5) which is at most 15 metres, the compressed air pressure in the transfer tank (4) is of the order of 0.1 to 0.2 MPa.

8. Installation for distributing granular materials to p fixed stations, which includes a storage silo connected to and supplying m underground storage tanks, each storage tank being connected to and supplying n devices according to one of Claims 1 to 7 above.

9. Installation according to Claim 8, characterized in that it includes, for each storage tank (2) and the n devices which are connected to it, only a single compressed air supply (37), the pressure and flow rate conditions of which are determined in order to obtain flow of the sand through the flexible pipe (6) according to solid-phase operation.

10. Installation according to Claim 9, characterized in that at least one device is mounted on a mobile carriage, and in that it includes fixed means for connecting the storage tank to the said mobile device.

## Patentansprüche

1. Vorrichtung für die Verteilung eines körnigen Materials, mit wenigstens einem Material-Transportbehälter (4), dem mit Druck beaufschlagte, komprimierte Luft zugeführt wird, und wenigstens einem tragbaren Verteilerkopf (5), der aus einem starren, hohlen Rohr (10) besteht, wovon ein erstes Ende (11) über eine flexible Schlauchleitung (11) mit dem Transportbehälter (4) verbunden ist, dadurch gekennzeichnet, daß die Bedingungen für den Druck und den Durchsatz der komprimierten Luft im Transportbehälter (4) in der Weise festgelegt sind, daß die Entleerung des Materials in die flexible Schlauchleitung (6) einem Betrieb der festen Phase entspricht und daß das zweite Ende (12) des starren, hohlen Rohrs (10) mit einem abnehmbaren Verschluß (13) versehen ist, der aus einer Platte besteht, die einen im wesentlichen kreisförmigen Teil enthält, der dem zweiten Ende (12) des Rohrs (10) zugewandt ist, wenn sich der Verschluß in der geschlossenen Stellung befindet; wobei die Platte in bezug auf einen Stift (14), der sich in Längsrichtung entlang der Außenseite des Rohrs (10) erstreckt und an der Platte in einem Teil befestigt ist, der in bezug auf deren kreisförmigen Teil exzentrisch ist, schwenkbar angebracht ist und der Stift (14) in Winkelrichtung durch einen mit dem Stift (14) fest verbundenen Griff (17) an dem dem Verschluß (13) gegenüberliegenden Ende (16) des Stifts betätigbar ist.

2. Vorrichtung nach Anspruch 1, dadurch gekennzeichnet, daß dann, wenn es sich um die Befüllung eines Vorratsbehälters (9) handelt, an dessen Oberseite eine Einlaßleitung (20) angebracht ist, die Abmessungen dieser Eingangsleitung (20) derart sind, daß das zweite Ende (12) des Rohrs (10) an seiner Position im Vorratsbehälter (9) fixiert ist, wenn sich der Verschluß (13) in der geöffneten Stellung befindet.

3. Vorrichtung nach einem der Ansprüche 1 oder 2, dadurch gekennzeichnet, daß sie einen drehbaren Schutz- und Verschiebungsträger enthält, der an der äußeren Fläche der schwenkbaren Platte (15) befestigt ist.

4. Vorrichtung nach Anspruch 3, dadurch gekennzeichnet, daß der drehbare Träger aus einer insbesondere kugelförmigen Rolle (39) besteht, die in einem Aufnahmesitz (40) frei drehbar angebracht ist, der seinerseits an der äußeren Fläche der Platte (43) durch ein ebenfalls frei drehbares Befestigungsmittel (47) angebracht ist.

5. Vorrichtung nach einem der Ansprüche 1 bis 4, dadurch gekennzeichnet, daß sie außerdem einen vertikalen Arm (24), der einen Teil der flexiblen Schlauchleitung (6) unterstützt und um eine in seinem unteren Teil befindliche horizontale Achse (25) schwenkbar angebracht ist, sowie Mittel (26) für die Begrenzung der Schwenkung des Arms (24) enthält.

6. Vorrichtung nach Anspruch 5, dadurch gekennzeichnet, daß die Schwenkachse (25) durch ein Schwenkmittel (23) in Drehrichtung angetrieben wird, das von einer Bedienungsperson (7), die den Verteilerkopf (5) trägt, durch Steuermittel (21), die am Rohr (10) in Nähe des ersten Endes (11) angebracht sind, betätigt werden kann.

7. Vorrichtung nach Anspruch 1 für die Verteilung von Sand, insbesondere in die Zug-Sandstreuvorrichtungen, von einem festen Punkt auf dem Bahnsteig, dadurch gekennzeichnet, daß die flexible Schlauchleitung (6) einen Innendurchmesser, der im Bereich von 30 bis 50 mm liegt, und eine Gesamtlänge zwischen dem Transportbehälter (4) und dem zweiten Ende (12) des Rohrs (11) des Verteilerkopfes (5) besitzt, die mehr als 15 m beträgt, wobei der Druck der komprimierten Luft im Transportbehälter (4) in der Größenordnung von 0,1 bis 0,2 MPa liegt.

8. Anlage für die Verteilung von körnigem Material mit p festen Stationen, die ein Speichersilo enthält, das mit unter der Erde befindlichen m Speicherbehältern verbunden ist und diese versorgt, wobei jeder Speicherbehälter mit n Vorrichtungen nach einem der obigen Ansprüche 1 bis 7 verbunden ist und diese versorgt.

9. Anlage nach Anspruch 8, dadurch gekennzeichnet, daß sie für jeden Speicherbehälter (2) und die n Vorrichtungen, die mit ihm verbunden sind, nur eine einzige Druckluftversorgung (37) enthält, deren Bedingungen für den Druck und den Durchsatz in der Weise festgelegt sind, daß die Entleerung des Sands in die flexible Schlauchleitung (6) gemäß einem Betrieb in fester Phase erhalten wird.

10. Anlage nach Anspruch 9, dadurch gekennzeichnet, daß wenigstens eine Vorrichtung auf einem beweglichen Schlitten angebracht ist und daß sie feste Mittel für die Verbindung des Speicherbehälters mit der beweglichen Vorrichtung enthält.
